# EUROPEAN PATENT APPLICATION

(11) **EP 1 542 203 A1**
(43) Date of publication of application: **15.06.2005**
(21) Application number: 04255486.5
(22) Date of filing: 10.09.2004
(51) Int. Cl.: G10G 5/00, F16M 11/00, A47B 9/00

(54) **An adjustable musical instrument stand**

(30) Priority: 08.12.2003 US 730473
(71) Applicant: Solid Stand Inc., Omaha, Nebraska 68127 (US)
(72) Inventor: Johnson, Jeffrey A., Omaha, Nebraska 68118 (US)
(74) Representative: Johnstone, Helen Margaret

(57) **Abstract**

The invention is a musical instrument stand that can be vertically adjusted while the instrument remains on the stand. Ideally, the mechanism that alters the height of the instrument will be operable by foot, so that the operator will be able to adjust the stand while playing the instrument.

## Description

### BACKGROUND OF THE INVENTION

### 1. Field of the Invention

This invention relates to the art of stands for musical instruments, primarily keyboards and other horizontally situated instruments such as keyboards, and in the adjustability of such stands with the instrument mounted thereon.

### 2. Description of the Prior Art

Musical instrument stands of various types are well known and widely used. Typically such stands consist of multi-legged structures that support either the instrument or an undercarriage. Some are composed of a base and a single support that holds a frame on which the instrument rests (a "pillar" configuration). Few of the stands are adjustable in height.

One instance of such a stand is described in U.S. Patent No. 5,467,953. That patent describes an instrument stand having essentially two legs, each leg having an end for contact with the floor and an end for supporting the instrument (an "X" configuration). The legs were pivotably joined at their middles, and the angle between them adjusted to adjust the height of the instrument. The adjustment was regulated by a locking gear mechanism having a plurality of working positions.

Another such instance of a stand is described in U.S. Patent No. 5,984,245. That patent teaches a similar "X" configuration instrument stand having as its positioning device an assembly comprising a control rod, a spring and two positioning discs. The assembly is manipulated by handlebars on each leg, and the angle between the legs is adjusted accordingly.

These designs and other that have been designed have failed to provide a stand that may be adjusted with the instrument still mounted on the stand.

### SUMMARY OF THE INVENTION

The invention therefore has, as a primary object, the improvement of musical instrument stands in such a way that they can be adjusted while the instrument remains on the stand. This object is met by different mechanisms appropriate to the type of stand employed. Ideally, each such mechanism will be operable by foot, so that the operator will be able to adjust the stand while playing the instrument.

One example of such a mechanism that could be employed on a stand having two legs in an "X" configuration would be a powered piston attached to each of the two legs and adapted to draw the legs toward or away from each other. Another example of such a mechanism that could be employed on a stand having a single "pillar" configuration would be to have the pillar adjustable support a support frame, and have a winch or similar drive adjust the height of the frame. Such a construction makes it possible to move the instrument from a first position, where, perhaps, the user is sitting at a keyboard, to a second position, where the user is standing at the keyboard, without having to remove the instrument from the stand, and without having to stop playing the instrument.

The invention is described in the following with reference to embodiment examples shown in the drawings.

Additional objects of the invention will be set forth in the description that follows, and will become apparent to those skilled in the art upon examination of the following.

### BRIEF DESCRIPTION OF THE DRAWINGS

The features advantages of the present invention will become more clearly appreciated as a description of the invention is made with reference to the appended drawings. In the drawings:
FIG. 1 is a side elevational view of the invention in a "pillar" configuration.
FIG. 2 is a front elevational view of the invention in a "pillar" configuration.
FIG. 3 is a side elevational view of the invention in an "X" configuration.
FIG. 4 is a front elevational view of the invention in an "X" configuration.
FIG. 5 is a side elevational view of the invention in a "table" configuration.
FIG. 6 is a front elevational view of the invention in a "table" configuration.

### DETAILED DESCRIPTION OF THE INVENTION

Preferred embodiments of the present invention will be described below by making reference to the drawings.

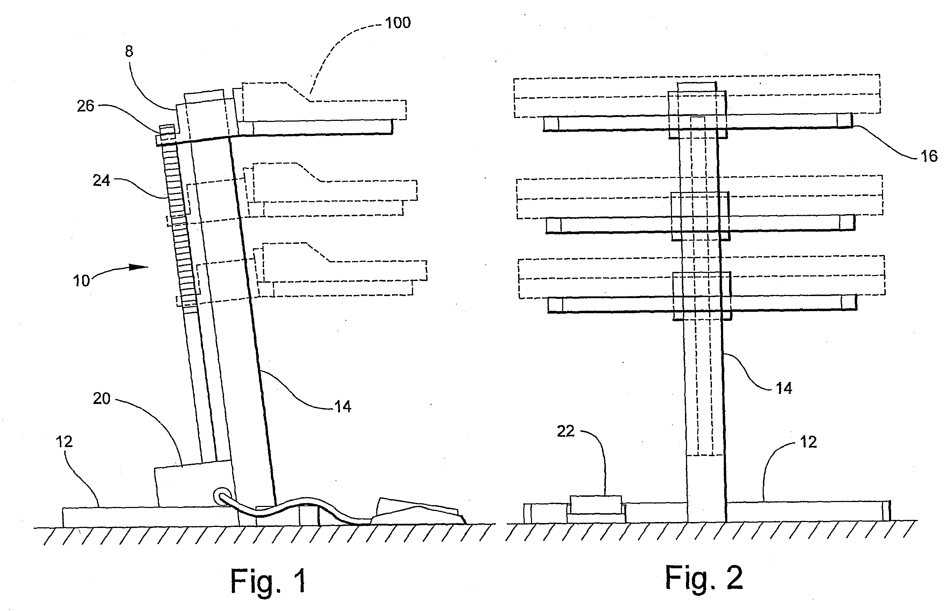

The present invention was developed for use with keyboard instruments. The stand, as shown in Figures 1-6, may take one of several forms.

In the first example of the invention, as shown in Figures 1-2, the stand **10** includes a base **12**. The base **12** includes multiple legs splayed outwardly from a central point. The legs may be adjustable for the purposes of conforming to an uneven surface, or may be adjustable in length to provide optimal stability. The stand **10** also comprises at least one substantially vertical pillar **14** extending upwardly from the base **12**.

A keyboard support 16 is supported on the pillar **14**. The keyboard support **16** comprises at least one substantially horizontal member on which a keyboard 100 may be mounted. Ideally, for stability purposes, the keyboard support **16** should have a single broad surface, as shown, or have two or more horizontal members that are spaced widely enough to prevent movement of the keyboard when the keyboard is played.

The keyboard support **16** should not be affixed to the pillar **14**, but should be adjustably mounted on the pillar **14** so that it may move vertically along the length of the pillar **14**. This may be achieved by providing the keyboard support **16** with a collar **18** that fits around the pillar **14**. To provide ease of movement, the collar **18** may incorporate rollers, ball bearings, low friction material lining, or other such materials as are well known in the art. Alternatively, the keyboard may be mounted to a collar **18** that fits within a chamber (not shown) in the pillar **14**. Ideally, in this configuration, the collar **18** should have an exterior horizontal cross-sectional profile substantially equivalent to the interior horizontal cross-sectional profile of the channel in the pillar **14**. The instrument stand **10** should also have means for moving the keyboard vertically along the pillar **14**. This may be provided by mechanical, hydraulic, or other means. In the example shown, the instrument stand includes an electric motor **20**, a foot switch **22**, and a vertically disposed, externally threaded screw member **24**. The screw member **24** is adapted to fit into an internally threaded aperture **26** in the collar **18.** The vertically disposed screw member **24,** which is essentially parallel to the pillar **14,** is rotated by the electric motor **20.** Ideally, the foot switch **22** will include a control that activates the electric motor **20** and turns the screw member **24** selectively in a clockwise or counterclockwise direction. Rotation of the screw member **24** will result in the raising or lowering of the keyboard without removing the keyboard from the keyboard support **16**.

Another mechanism that may be used would be a winch and pulley system (not shown). The pulley may be included at the top of the pillar **14** or at the top of the interior chamber of the pillar. The mechanism may include a winch at the base of the stand **10** and a cable that extends either through the chamber or along the pillar to the pulley and downwardly to the collar **18.** Activation of the winch would pull the collar **18** upwardly and the raise the keyboard. Release of the winch would allow the keyboard to be drawn downwardly by force of gravity. Alternatively, the cable may be attached to the collar **18** so that it may exert force on the collar **18** selectively from the top and the bottom, and the winch arranged to move the cable in either of two directions such that activation of the winch results in the controlled adjustment of the height of the keyboard without removing the keyboard from the keyboard support **16**. A further embodiment of this invention (not shown) would position the winch at the top of the pillar, and would work generally in the manner described.

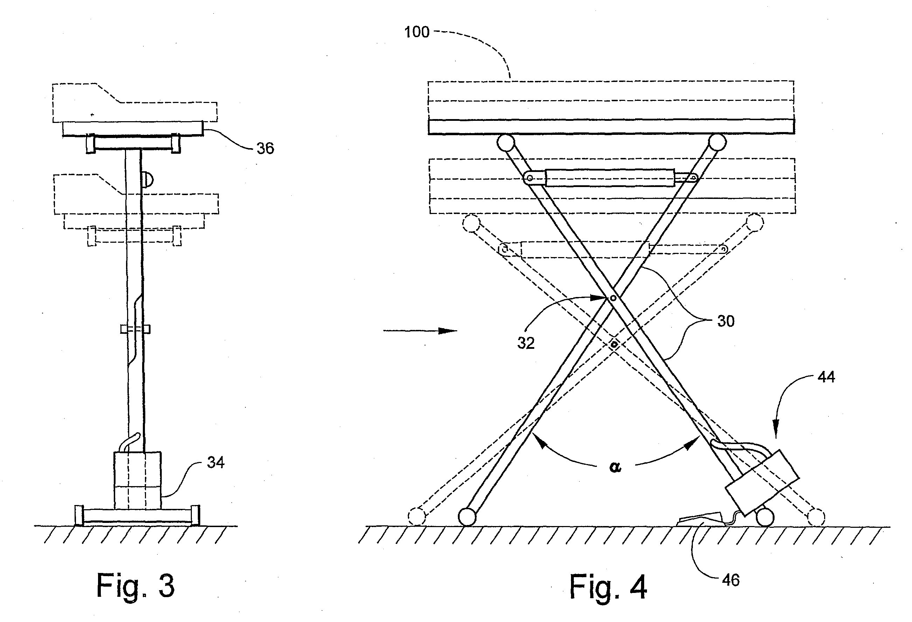

In a second embodiment of the invention, shown in Figures 3 and 4, the instrument stand **10'** comprises two legs **30** pivotally joined at a central point **32**. Each leg **30** has a bottom end and a top end. The bottom end of each leg should have horizontally extending legs **34** that are adapted to hold the keyboard stand **10'** upright. The top end of the legs **30** should include means to support the keyboard. Although such means may incorporate horizontally extending legs, ideally, the top ends of the legs should engage a horizontal keyboard support **36.** The horizontal keyboard support **36** should be adjustably mounted on the top ends of the two legs **30.** It should be mounted on the two legs such that the legs **30** may move horizontally along the length of the keyboard support **36**. Such a configuration would allow for the raising and lowering of the stand while maintaining the keyboard in a horizontal position. Furthermore, a mechanism may be employed to maintain the keyboard in a central position with relation to the keyboard stand through the use of a twin rack and pinion mechanism (not shown), or other such mechanism well known in the mechanical arts.

The invention further comprises means to adjust the angle between the two legs **30**. This may be comprised of a mechanical or hydraulic actuator mounted on the legs between the pivotal center point and the upper or lower ends of the legs **30**. As shown in Figure 4, the means comprises a hydraulic piston **38** having a first end **40** mounted on the first leg and a second end **42** mounted on the second leg. The hydraulic piston is attached to a hydraulic pump **44** that can alter the pressure within the hydraulic piston **38**. The pump, ideally, is activated by a foot switch **46**. As shown in the drawings, by reducing the pressure in the piston **38**, the angle between the legs **30** is reduced and the keyboard is raised without removing the keyboard from the keyboard support **36**.

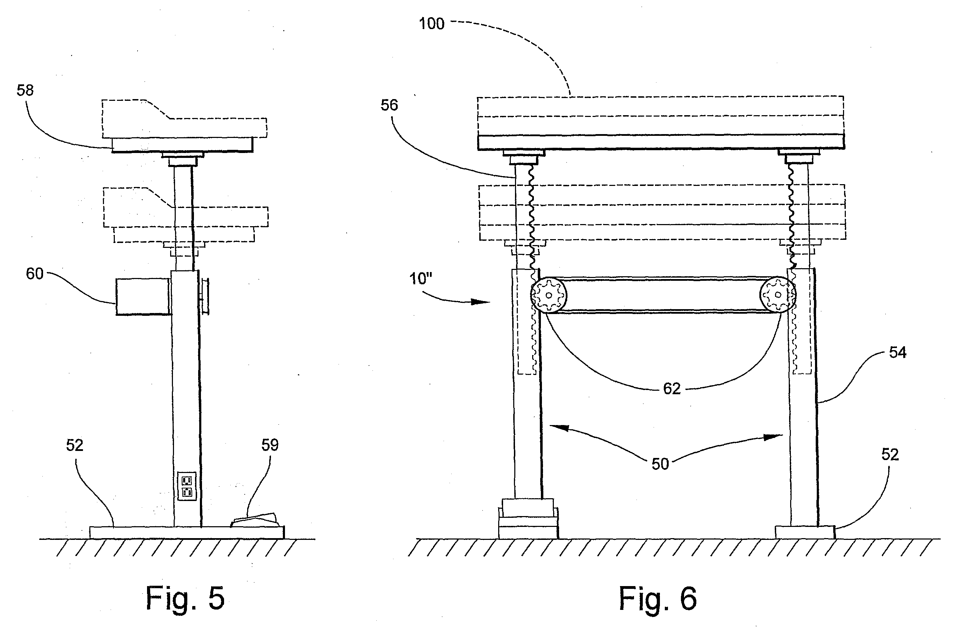

A third embodiment of the invention comprises a traditional table-style stand **10"**. The stand **10"** includes at least two vertically disposed legs. The legs will be designed to provide stability to the stand, either by the provision of numerous legs or by the provision of legs providing a large enough base to lend stability to the stand **10"**. In the embodiment shown, the stand incorporates two pedestal-type legs **50**, each having a base **52** that extends outward horizontally from the plane defined by the two legs. Each leg comprises a base section **54** that is affixed to its base and an adjustable section **56** that is axially adjustably mounted on the base section. The adjustable sections **56** are each affixed to a keyboard support **58** on which the keyboard **100** is mounted. The stand **10"** includes a mechanism, such as those earlier described, to move the adjustable legs axially along the length of the base section, resulting in the raising or lowering of the keyboard. Ideally, the raising or lowering of the keyboard support **58** is effectuated by the activation, by foot switch **59** or other control of a single mechanism, as exemplified by the electric motor **60** that is shown in Figure 5. Preferably, the adjustable sections of the legs are moved simultaneously by a double rack and pinion mechanism **62** or a chain drive or similar device as are well known in the art.

In the several embodiments of the invention described, the keyboard may remain affixed to the instrument stand and the keyboard height adjusted. No removal of the keyboard is necessary to adjust the height. The design may be changed so that the adjustable keyboard support may raise or lower more than one keyboard. The design may also be used in conjunction with a fixed keyboard support so that a selected number of keyboards may be raised or lowered while at least one keyboard remains stationary. Similarly, more than one adjustable keyboard support may be mounted on a stand.

It will be appreciated that the present invention is not limited to the exact construction that has been described above and illustrated in the accompanying drawings, and that various modifications and changes can be made without departing from the scope and spirit thereof. It is intended that the scope of the invention only be limited by the appended claims. Thus it can be seen that all of the objects of the invention are met.

## Claims

1. An adjustable musical instrument stand, comprising:
a base member;
at least one stand member connected to and extending substantially vertically from said base member, said at least one stand member having a length;
an instrument support vertically adjustably mounted on said at least one stand member; means for moving said instrument support vertically along said length of said at least one stand member;
whereby an instrument may be supported by said instrument support and may be adjusted to a desired height by adjustment of said instrument support without removing the instrument from the instrument support.

2. The adjustable musical instrument stand of claim 1, whereby said means for moving said instrument support is electronic.

3. The adjustable musical instrument stand of claim 1, whereby said means for moving said instrument support is hydraulic.

4. The adjustable musical instrument stand of claim 2, whereby said means for moving said instrument support comprises a winch mounted on said adjustable music stand, a cable extending from said winch to said instrument support, said winch operative to take in said cable and thereby adjust the height of said instrument support.

5. The adjustable musical instrument stand of claim 4, whereby said at least one stand member has a top end and said winch is mounted on said stand member proximal said top end.

6. The adjustable musical instrument stand of claim 4, whereby said at least one stand member has a bottom end and a top end and said winch is mounted on said stand member proximal said bottom end, further comprising a pulley mounted proximal said top end and adapted to engage said cable.

7. The adjustable musical instrument stand of claim 2, whereby said means for moving said instrument support comprises: a motor, a screw drive having a threaded screw extending parallel to said at least one stand member, said threaded screw being operatively attached to said motor, said instrument support being adapted to receive said threaded screw whereby activation of said motor cases the rotation of the threaded screw and adjusts the height of said instrument support.

8. The adjustable musical instrument stand of claim 3 whereby said means for moving said instrument support comprises: a pump, a piston having first and second ends, said first end being attached to said instrument support and said second end being attached to said base member or said at least one stand member, said piston being in operative communication with said pump such that activation of said pump varies pressure within said piston and causes said piston to vary its length and adjusts the height of said instrument support.

9. The adjustable musical instrument stand of claim 1, whereby said means for moving said instrument support comprises a control that may be manipulated by foot.

10. An adjustable musical instrument stand comprising:
first and second legs pivotally secured together and arranged to define an angle between said first and second legs, each leg having a top end and a bottom end
each said top end being adapted to support a musical instrument support;
each said bottom end adapted to support in a generally upright position the adjustable musical instrument stand and the musical instrument support;
means for adjusting the angle between said first and second legs whereby an instrument may be supported on said musicacl instrument support and may be adjusted to a desired height by adjustment of said musical instrument support without removing the instrument from the adjustable musical instrument stand.

11. The adjustable musical instrument stand of claim 10, whereby said means for adjusting the angle between said first and second legs is electronic.

12. The adjustable musical instrument stand of claim 10, whereby said means for adjusting the angle between said first and second legs is hydraulic.

13. The adjustable musical instrument stand of claim 11, whereby said first and second legs are pivotally secured together at a midpoint and said means for adjusting the angle between said first and second legs comprises: a motor mounted on said first leg between said midpoint and either of said top or bottom ends, a screw drive having a threaded screw, said threaded screw being operatively attached to said motor, a receiving bracket mounted on said second leg between said midpoint and either of said top or bottom ends, said receiving bracket being adapted to receive said threaded screw whereby activation of said motor cases the rotation of the threaded screw and adjusts the angle between said first and second legs and the height of said top ends of said first and second legs.

14. The adjustable musical instrument stand of claim 12 whereby said first and second legs are pivotally secured together at a midpoint and whereby said means for adjusting the angle between said first and second legs comprises: a pump, a piston having first and second ends, said first end being attached to said first leg between said midpoint and either of said top or bottom ends, and said second end being attached to said said second leg between said midpoint and either of said top or bottom ends, said piston being in operative communication with said pump such that activation of said pump varies pressure within said piston and causes said piston to vary its length and adjusts the angle between said first and second legs and the height of said top ends of said first and second legs.

15. The adjustable musical instrument stand of claim 10, whereby said means for adjusting the angle between said first and second legs comprises a control that may be manipulated by foot.

16. An adjustable musical instrument stand comprising:
At least two legs, each leg having an adjustable height, a top end and a bottom end
each said top end being adapted to support a musical instrument support, said instrument support being adapted to support a musical instrument;
each said bottom end adapted to support in a generally upright position the adjustable musical instrument stand and the musical instrument support;
means for adjusting the height of said at least two legs whereby an instrument may be supported by said instrument support and may be adjusted to a desired height without removing the instrument from the adjustable musical instrument stand.

17. The adjustable musical instrument stand of claim 16, whereby said means for adjusting the height of said at least two legs moves said at least two legs simultaneously.

18. The adjustable musical instrument stand of claim 16, whereby said means for adjusting the height of said at least two legs comprises a control that may be manipulated by foot.
